# EUROPÄISCHE PATENTANMELDUNG

(11) **EP 4 685 553 A1**
(43) Veröffentlichungstag der Anmeldung: **28.01.2026**
(21) Anmeldenummer: 24191121.3
(22) Anmeldetag: 26.07.2024
(51) Int. Cl.: G02F 1/15, G02F 1/161

(54) **FLÄCHENKÖRPER MIT EINEM ELEKTROCHROMEN SCHICHTSYSTEM**

(71) Anmelder: Universität Kassel (Körperschaft d. öffentlichen Rechts), 34125 Kassel (DE)
(72) Erfinder: JOHANNES, Christopher, 79269 Eschwege (DE); MEYER, Miriam Simone, 34233 Fuldatal (DE); HARTUNG, Michael, 34212 Melsungen (DE); HEIM, Hans-Peter, 33332 Gütersloh (DE)
(74) Vertreter: Walther Bayer Faber Patentanwälte PartGmbB

(57) **Zusammenfassung**

Gegenstand der Erfindung ist ein Flächenkörper (1) mit einem elektrochromen Schichtsystem (10), wobei das Schichtsystem (10) zwei elektrisch leitende Schichten (11) aufweist, zwischen denen eine elektrochrome Schicht (12), eine Elektrolytschicht (13) und eine lonen-Speicherschicht (14) angeordnet sind, und wobei das Schichtsystem (10) zwei außenseitige Deckschichten (15) aufweist. Um eine lange Gebrauchsdauer zu erreichen, ist vorgesehen, dass das Schichtsystem (10) wenigstens abschnittsweise einen Randbereich (16) aufweist, der mit einer Klebemasse (17) als Permeationsbarriere verklebt ist, derart, dass wenigstens die Elektrolytschicht (13) von der Klebemasse (17) randseitig eingefasst ist, und wobei das Schichtsystem (10) zumindest im Randbereich (16) mit einem Kunststoffkörper (18) umschlossen ist, der auch die Klebemasse (17) wenigstens überwiegend mit umschließt.

## Beschreibung

Die Erfindung betrifft einen Flächenkörper mit einem elektrochromen Schichtsystem, wobei das Schichtsystem zwei elektrisch leitende Schichten aufweist, zwischen denen eine elektrochrome Schicht, eine Elektrolytschicht und eine Ionen-Speicherschicht angeordnet sind, und wobei das Schichtsystem zwei außenseitige Deckschichten aufweist.

### STAND DER TECHNIK

Aus der EP 0 942 061 B1 ist beispielsweise ein Flächenkörper mit einem elektrochromen Schichtsystem bekannt, wobei das Schichtsystem zwei elektrisch leitende Schichten aufweist, zwischen denen eine elektrochrome Schicht, eine Elektrolytschicht und eine Ionen-Speicherschicht angeordnet sind, und wobei das Schichtsystem zwei außenseitige Deckschichten aufweist.

Die Deckschichten dienen zum Schutz und zur Stabilisierung der elektrochrom aktiven Schichten, und vor allem werden diese als Substrate herangezogen, um das Schichtsystem auf den Deckschichten aufzubauen. Die Deckschichten können beispielsweise ein Polycarbonat aufweisen. Die elektrisch leitenden Schichten sind nur bis zu wenige hundert Nanometer dick und beispielsweise aus Indium-Zinn-Oxid (ITO). Alternativen können organisch leitfähige Polymere sein, z.B. PEDOT:PSS-Schichten. Wird zwischen den beiden ITO-Schichten eine elektrische Spannung angelegt, findet eine Redoxreaktion statt. Es werden Kationen aus der Ionen-Speicherschicht durch den ionenleitenden Elektrolyten in die elektrochrome Schicht überführt. Zum Ladungsausgleich fließen über den äußeren Stromkreis Elektronen von der Ionen-Speicherschicht (Oxidation) in die elektrochrome Schicht (Reduktion). Dabei verändern sich die Transmissions- und/oder Reflexionseigenschaften der elektrochromen Schicht. Wird die Spannung umgepolt, findet eine entgegengesetzte Reaktion statt und die optischen Eigenschaften kehren in ihren Ausgangszustand zurück. Der Prozess ist reversibel. Es gibt anodisch und kathodisch schaltende elektrochrome Materialien. Auch die Ionen-Speicherschicht kann elektrochrome Eigenschaften aufweisen und bei komplementär schaltenden aktiven Schichten die optische Veränderung verstärken.

Chromagene Systeme sind dadurch charakterisiert, dass ihre optischen Eigenschaften, also die Absorption, Transmission oder die Reflexion durch äußere Einwirkung reversibel verändert werden können, was sie für Anwendungen interessant macht, bei denen einfallendes Licht oder auch Infrarotstrahlung reguliert werden können. Denkbare Anwendungen sind hierfür vor allem der Augenschutz wie Brillen, Visiere oder Frontscheiben von Fahrzeugen, wobei derartige Systeme auch in der Architektur Anwendung finden können. Eine Klassifizierung kann auf Grundlage der Art der Einflussnahme vorgenommen werden: Bekannt sind Licht, Temperatur, Gase oder eine elektrische Spannung als Stimulanz, letztere bilden sogenannte elektrochrome Systeme. Elektrochrome Systeme (ECDs, Electrochromic Devices) haben den Vorteil, dass diese eine aktive Steuerung der optischen Eigenschaften ermöglichen, während thermochrome oder photochrome Systeme passiv auf Umwelteinflüsse reagieren, beispielsweise selbstdunkelnde Sonnenbrillen. Gaschromatische Systeme werden aufgrund der benötigten Gaszuleitung als nicht mehr relevant für industrielle Anwendungen erachtet und bilden allenfalls Lösungen für vereinzelte technische oder wissenschaftliche Anwendungen.

Verwandte Systeme basieren auf Partikeln oder Flüssigkristallen in einer Matrix, beispielsweise Polymer Dispersed Liquid Crystal (PDLC)-Systeme, die im spannungslosen Zustand transluzent, also milchig sind, und beim Anlegen einer Spannung werden diese transparent, also durchsichtig, indem die Partikel oder Flüssigkristalle im elektrischen Feld ausgerichtet werden. Ohne elektrisches Feld fallen die Partikel oder die Flüssigkristalle in den ungeordneten Zustand zurück und streuen den größten Teil des auftreffenden Lichtes. Diese Systeme finden Anwendung bei beispielsweise Trennwänden in Büros, Toilettentüren oder Fahrer- und Fahrgastraum in Zügen, und im Bedarfsfall kann damit eine Privatsphäre hergestellt werden, da der milchige, transluzente Flächenkörper für gewöhnlich nicht durchsichtig ist. Nachteilig im Vergleich zu elektrochromen Lösungen ist, dass hohe elektrische Spannungen angelegt werden müssen, die einen vergleichsweise hohen Energiebedarf zur Aufrechterhaltung eines Schaltzustandes haben und im Wesentlichen nur zwischen einer milchigen und einer durchsichtigen Eigenschaft des Substrates geschaltet werden können. ECD-Systeme hingegen können, je nach eingesetzten Materialien, in bestimmten Wellenlängenbereichen absorbieren, beispielsweise im Infrarotbereich zur Wärmeregulierung und/oder im sichtbaren Bereich zur Abdunklung als Blendschutz, dabei können diese aber durchsichtig bleiben und benötigen deutlich weniger Energie, um die Schaltzustände zu ändern sowie nach Erreichen der Schaltzustände keine Spannung zur Aufrechterhaltung derselben mehr benötigen. Ein klassisches Beispiel hierfür ist der abblendbare Rückspiegel im Auto.

Der eigentliche Aufbau des Schichtsystems ist im Vergleich zu Brillengläsern, Visieren oder Frontscheiben für Fahrzeuge sehr dünn, etwa 0,25 mm bis maximal 1 mm. Dabei bilden die außenseitigen Deckschichten als Trägersubstrate mit etwa 100 - 250 µm die dickste Schicht, wobei die Summe aller weiteren Schichten inklusive der Elektrolytschicht beispielsweise 50 - 100 µm betragen können. So ist es von Vorteil, an das Schichtsystem einen Kunststoffkörper im Spritzguss anzuspritzen, oder das Schichtsystem wird mit einer Kunststoffmasse umspritzt, um schließlich aus dem für technische Anwendungen dünne Schichtsystem einen gebrauchsfähigen, formstabilen Flächenkörper zu bilden, etwa für ein Brillenglas, ein Visier eines Helmes oder einer Frontscheibe. Nachteilhafterweise altern die Schichten eines elektrochromen Schichtsystems unter Einfluss von Umweltfaktoren, insbesondere der Elektrolyt ist feuchtigkeitsempfindlich und organische Schichtmaterialien können oxidieren, möglicherweise beschleunigt durch die elektrochemische Reaktion. Aufwendige Abdichtungen der elektrochromen Schichtsysteme ermöglichen hingegen kein kostengünstiges Bereitstellen von einfachen Flächenkörpern, beispielsweise für den Augenschutz.

### OFFENBARUNG DER ERFINDUNG

Die Aufgabe der Erfindung ist die weitere Verbesserung eines Flächenkörpers mit einem elektrochromen Schichtsystem, der einfach hergestellt werden kann und eine lange Gebrauchsdauer des Schichtsystems ermöglicht. Insbesondere soll der Flächenkörper möglichst formstabil sein und auf einfache, kostengünstige Weise hergestellt werden können, und gleichzeitig soll eine möglichst effektive Abdichtung der Schichten des Schichtsystems erreicht werden.

Diese Aufgabe wird ausgehend von einem Flächenkörper gemäß dem Oberbegriff des Anspruchs 1 mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Schichtsystem wenigstens abschnittsweise einen Randbereich aufweist, der mit einer Klebemasse zur Herstellung einer Permeationsbarriere verklebt ist, derart, dass wenigstens die Elektrolytschicht, bevorzugt die Elektrolyt-, elektrochrome und lonenspeicher-Schicht, von der Klebemasse randseitig eingefasst ist, und wobei das Schichtsystem zumindest im Randbereich mit einem Kunststoffkörper umschlossen ist, der auch die Klebemasse wenigstens überwiegend mit umschließt.

Kern der Erfindung ist eine effiziente Abdichtung des Schichtsystems und insbesondere der Elektrolytschicht. Die Abdichtung erfolgt über zwei Dichteffekte, nämlich erstens über eine Klebemasse, die randseitig eingebracht werden kann und mindestens die Elektrolytschicht, bevorzugt die Elektrolyt-, elektrochrome und lonenspeicher-Schicht, wenigstens überwiegend und vorzugsweise vollumfänglich abdichtet, sodass weder Feuchtigkeit noch Sauerstoff an die Schichten gelangen können. Zweitens soll der Kunststoffkörper, der dem Flächenkörper die eigentliche mechanische Stabilität verleiht, auch dazu genutzt werden, zusätzlich zur Klebemasse abzudichten, indem der Kunststoffkörper zumindest auch die Klebemasse wenigstens überwiegend und vorzugsweise vollumfänglich mit umschließt. Dadurch erfüllt der Kunststoffkörper zwei Aufgaben, einerseits kann der Flächenkörper über den Kunststoffkörper mit einer entsprechenden Dicke, beispielsweise 0,5 mm bis 5 mm, eine Stabilität verleihen, und zum anderen dient der Kunststoffwerkstoff zur zusätzlichen Abdichtung wenigstens der innenliegenden Schichten des Schichtsystems. Zusätzlich können Funktionselemente und 3D-Geometrien direkt in das Formteil integriert werden, beispielsweise Rippenstrukturen, Wölbungen, Befestigungselemente wie Schnapphaken oder Oberflächenstrukturen.

Vor allem kann damit auch erreicht werden, dass die elektrochrome Schicht, die Elektrolytschicht und die Ionen-Speicherschicht mit eingekapselt sein können. Das ist wichtig, da erwartet wird, dass die beste Abdichtung am besten zwischen leitfähiger Schicht und Klebstoff stattfindet und eine Seitenpermetation durch die elektrochrome und Ionen-Speicherschicht nicht oder nur stark vermindert stattfinden kann, weil diese auch durch den Klebstoff mit eingekapselt sein können.

Der Kunststoffkörper wird vorzugsweise im Spritzgussverfahren an das Schichtsystem angespritzt, beispielsweise indem das Schichtsystem zuvor in ein Spritzgusswerkzeug eingelegt wird. So kann der Kunststoffkörper wenigstens teilweise den Randbereich umschließen und mit den außenseitigen Deckschichten dichtend abschließen. Alternativ ist es auch denkbar, dass der Kunststoffkörper den Randbereich und wenigstens eine oder beide Deckschichten außenseitig vom Randbereich unterbrechungsfrei übergehend vollständig umschließt. Im Ergebnis ergibt sich im letzteren Fall ein Flächenkörper, der rundum eine Außenhaut aus dem Kunststoffkörper bildet, ausgenommen zumindest zwei elektrische Leiter zur Kontaktierung der beiden elektrisch leitenden Schichten, die durch den Kunststoffkörper hindurchgeführt sind.

Vorteilhafterweise erstreckt sich die Klebemasse zwischen den elektrisch leitenden Schichten. So wird erreicht, dass die Klebemasse die Elektrolytschicht, elektrochrome und Ionen-Speicherschicht vollumfänglich umschließt und innenseitig gegen die leitfähige Schicht abschließt. Es ist beispielsweise denkbar, dass die elektrochrome Schicht und/oder die Ionen-Speicherschicht aus dem Randbereich von den Deckschichten entfernt wurde (oder gar nicht aufgebracht wurde), sodass in diesem Randbereich die Klebemasse eingebracht wird und gegen die leitfähigen Schichten abdichtet.

Die erste Deckschicht mit der ersten elektrisch leitenden Schicht und insbesondere auch mit der elektrochromen Schicht kann eine erste Halbzelle bilden, und die zweite Deckschicht mit der zweiten elektrisch leitenden Schicht und insbesondere auch mit der Ionen-Speicherschicht, kann eine zweite Halbzelle bilden. Diese beiden Halbzellen können separat hergestellt werden, indem die Deckschichten als Substrate dienen und mit den entsprechend dünnen elektrisch leitenden und elektrochromen Schichten beziehungsweise mit der Ionen-Speicherschicht beschichtet werden. Zwischen diese beiden Halbzellen kann schließlich der Elektrolyt eingegeben werden, und werden die beiden Halbzellen aufeinander gebracht, befindet sich der Elektrolyt zwischen den beiden Halbzellen und bildet das vollständige Schichtsystem.

Dabei ist es von Vorteil, dass die beiden Halbzellen insbesondere zur Bildung des Flächenkörpers eine voneinander abweichende Kontur aufweisen, sodass eine Halbzelle die andere Halbzelle lokal oder abschnittsweise in seiner Erstreckungsebene überragt, insbesondere mit einem überragenden Abschnitt der jeweiligen Halbzelle.

Dieser seitlich in der flächigen Erstreckung der Deckschichten überragende Abschnitt eignet sich folglich, um ein elektrisches Kontaktmittel anzubringen, das schließlich mit dem elektrischen Leiter kontaktiert wird. Das elektrische Kontaktmittel wird dabei auf die Oberfläche der elektrisch leitenden Schicht aufgebracht, sodass diese schließlich mit einer entsprechenden Spannung versorgt werden kann, um ein Potenzial zwischen den beiden elektrisch leitenden Schichten aufzubauen. Das elektrische Kontaktmittel kann dabei höher aufbauen als die Dicke der Elektrolytschicht, da in den überragenden Abschnitten das elektrische Kontaktmittel die Dicke der weiteren Halbzelle überragen kann. Wird schließlich der Kunststoffkörper wenigstens im Randbereich auf das Schichtsystem aufgebracht, kann der Kunststoffkörper auch das elektrische Kontaktmittel mit einkapseln, sodass schließlich nur noch der elektrische Leiter aus dem Kunststoffkörper herausgeführt wird. Das elektrische Kontaktmittel kann eine Kupfer- Gold- oder Silberschicht sein, die auf der elektrisch leitenden Schicht aufgebracht ist und insbesondere den Flächenkörper zumindest teilweise oder vollständig umschließt, um einen gleichmäßigen Spannung- und Stromeintrag in die elektrisch leitende Schicht zu erreichen.

Die Klebemasse kann mittels eines Acrylatklebers gebildet sein, und das Klebemittel kann insbesondere einen sogenannten Getter aufweisen, der eine Feuchtigkeitsabsorption ermöglicht, sodass durch den additivierten Getter im Klebstoff, insbesondere im Acrylatkleber, eine noch bessere Barriere gegen Feuchtigkeit für die Elektrolytschicht gebildet ist.

Der Kunststoffkörper kann einen Polycarbonat-, einen Polyethylenterephthalat- oder einen Polymethylmethacrylat-Kunststoff aufweisen. Vorteilhafterweise weisen die äußeren Deckschichten und der Kunststoffkörper den gleichen Kunststoff auf, sodass beim Anspritzen des Kunststoffkörpers an die Deckschichten eine besonders gute Haftung erreicht wird.

Insbesondere kann der Flächenkörper einen Augenschutz bilden. Der Augenschutz ist beispielsweise als Brille, als Visier oder als Scheibe eines Wasser-, Land- oder Luftfahrzeuges ausgebildet. So richtet sich die Erfindung schließlich ferner auf einen Augenschutz, aufweisend einen Flächenkörper gemäß vorangehender Darstellung. Der Augenschutz umfasst dabei insbesondere eine Spannungs- oder Stromquelle, vorzugsweise als Teil oder beinhaltet in einem Steuergerät. Auch sind Anwendungen in Maschinen denkbar, etwa Sichtfenster zur Beobachtung eines Bearbeitungsprozesses.

Die Erfindung richtet sich weiterhin auf ein Verfahren zur Herstellung eines Flächenkörpers mit einem elektrochromen Schichtsystem, wobei das Schichtsystem zwei elektrisch leitende Schichten aufweist, zwischen denen eine elektrochrome Schicht, eine Elektrolytschicht und eine Ionen-Speicherschicht angeordnet sind, und wobei das Schichtsystem zwei außenseitige Deckschichten aufweist, und wobei das Verfahren wenigstens die folgenden Schritte umfasst: wenigstens abschnittsweises Verkleben eines Randbereiches des Schichtsystems mit einer Klebemasse, wobei das Verkleben derart erfolgt, dass wenigstens die Elektrolytschicht von der Klebemasse randseitig eingefasst wird, und Umschließen des Schichtsystems zumindest im Randbereich mit einem Kunststoffkörper, mit dem auch die Klebemasse wenigstens überwiegend mit umschlossen wird. Der Kunststoffkörper wird insbesondere mittels eines Spritzgießens an oder um das Schichtsystem gespritzt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht des Aufbaus des Schichtsystems zur Bildung des Flächenkörpers,
- Figur 2: das Schichtsystem gemäß Figur 1, wobei Schichten in eine erste Halbzelle und eine zweite Halbzelle gruppiert dargestellt sind,
- Figur 3: der Flächenkörper mit dem Schichtsystem und einem angespritzten Kunststoffkörper,
- Figur 4: der Flächenkörper mit dem Schichtsystem, wobei der Kunststoffkörper das Schichtsystem vollständig umschließt,
- Figur 5: ein Beispiel eines Augenschutzes, ausgeführt als Skibrille, und
- Figur 6: ein Beispiel eines Augenschutzes, ausgeführt als Visier eines Motorrad- oder Skihelms.

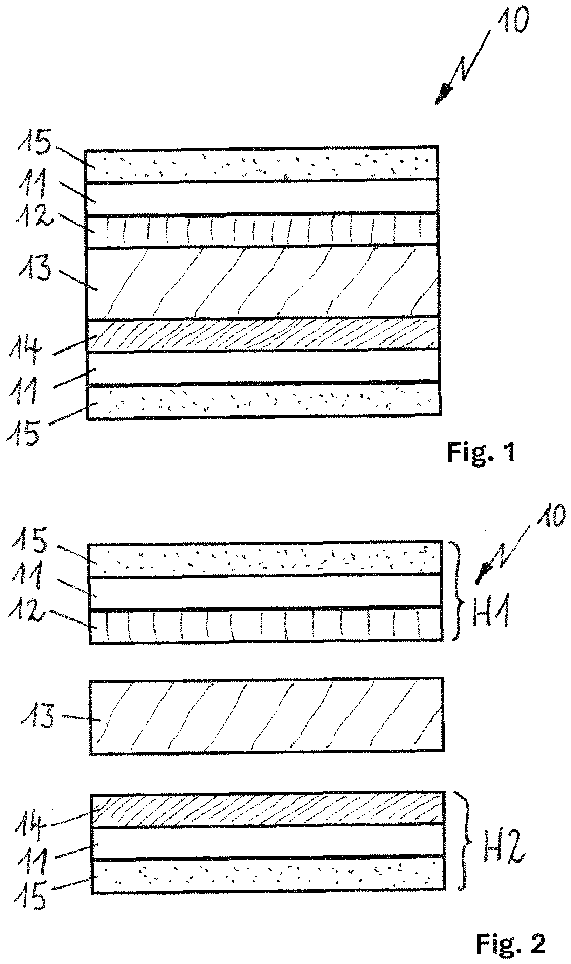

Die Figuren 1 und 2 zeigen jeweils ein elektrochromes Schichtsystem 10 mit zwei außenliegenden Deckschichten 15, beispielsweise aus einem Polycarbonat. Innenseitig der Deckschichten 15 folgen elektrisch leitende Schichten 11, beispielsweise ITO-Schichten, die weniger als ein Mikrometer Dicke aufweisen, wohingegen die Deckschichten 15 eine Dicke von beispielsweise jeweils 125 µm oder 250 µm aufweisen. Innenseitig der elektrisch leitenden Schicht 11 befindet sich oberseitig eine elektrochrome Schicht 12 und unterseitig eine lonen-Speicherschicht 14. Zwischen der elektrochromen Schicht 12 und der Ionen-Speicherschicht 14 befindet sich eine Elektrolytschicht 13. Die elektrisch leitenden Schichten 11, die elektrochrome Schicht 12, die Elektrolytschicht 13 und die Ionen-Speicherschicht 14 können insgesamt eine Dicke von beispielsweise 30 µm bis 100 µm aufweisen.

Als elektrochrome Schicht 12 kann beispielsweise ein PEDOT:PSS Material Anwendung finden, das selbst auch leitend ausgeführt sein kann, sodass auch daraus eine elektrisch leitende Schicht 11 gebildet werden kann. Die Ionen-Speicherschicht 14 beispielsweise kann aus einem Preußischblau ausgebildet sein, wobei auch die darunter liegende weitere elektrisch leitende Schicht 11 ein hochleitendes PEDOT:PSS bilden kann. Als Ionen-Speicherschicht kann aber auch ein Titanoxid Anwendung finden (TiO₂). Schließlich ist es denkbar, dass die Elektrolytschicht 13 auf Polymerbasis aufgebaut wird und in fester, aber flexibler Form vorliegt..

Die Halbzellen H1, H2 werden hergestellt, indem zunächst die Deckschicht 15 als Substrat bereitgestellt wird, anschließend wird die elektrisch leitende Schicht 11 aufgebracht, beispielsweise als ITO-Beschichtung, und auf diese wird schließlich bei der ersten Halbzelle H1 die elektrochrome Schicht 12 und bei der zweiten Halbzelle H2 die Ionen-Speicherschicht 14 aufgebracht. Diese beiden Schichtsysteme werden anschließend unter Einschluss des Elektrolyt 13 aufeinander gebracht, wobei der Elektrolyt beispielsweise auf Polymerbasis eine klebende Wirkung zur Verbindung der beiden Halbzellen H1, H2 entfalten kann.

Damit wird ein Schichtsystem 10 nach dem "Batterietyp" geschaffen, und dieses kann beispielsweise mit einer Spannung zwischen den beiden elektrisch leitenden Schichten 11 von bis zu etwa +/- 2,5 Volt betrieben werden. Je nach Spannung und Dauer der anliegenden Spannung können so verschiedene Schaltzustände hergestellt werden, sodass der Transmissionsgrad durch das Schichtsystem 10 variiert, und ein Hell- und Dunkelzustand entsprechend genutzt werden kann. Der Transmissionsgrad ist abhängig von der angelegten Spannung und bleibt auch bei nicht angelegter Spannung entsprechend erhalten. Innerhalb des Schichtsystems 10 läuft eine Redoxreaktion ab, die den chromatischen Zustand der elektrochromen Schicht 12 verändert beziehungsweise hält und dadurch die optischen Eigenschaften erzielt.

Das Schichtsystem 10 wird anschließend nur noch mit den beiden Halbzellen H1 und H2 sowie der dazwischenliegenden Elektrolytschicht 13 dargestellt.

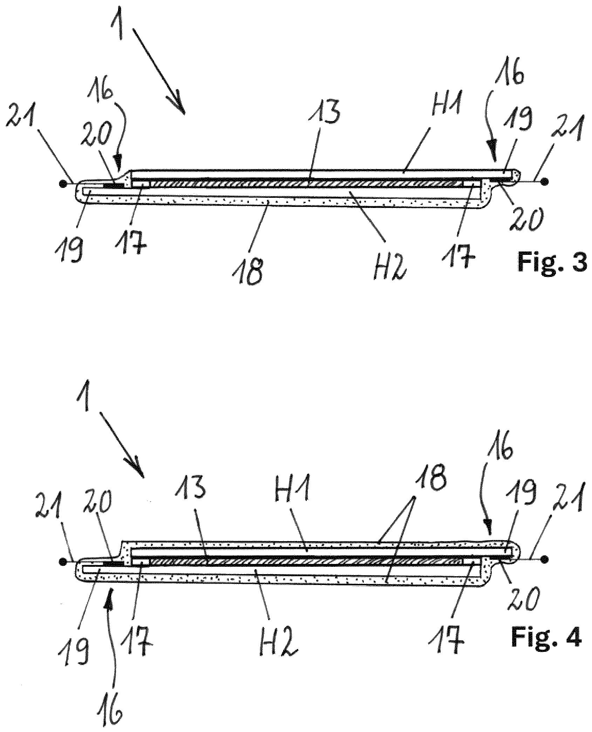

Die Figuren 3 und 4 zeigen verschiedene Ausführungsbeispiele der Flächenkörper 1 mit dem Schichtsystem umfassend die erste Halbzelle H1, die zweite Halbzelle H2 und die Elektrolytschicht 13. Die Randbereiche 16 der beiden Halbzellen H1 und H2 sind so ausgeführt, dass eine der beiden Halbzellen H1, H2 die andere Halbzelle H1, H2 überragt. Der sich so ergebende überragende Abschnitt 19 im Randbereich 16 auf der rechten Seite wird erzeugt, indem die erste Halbzelle H1 weiter ausläuft als die zweite Halbzelle H2, sodass der überragende Abschnitt 19 erzeugt wird. Auf diesem überragenden Abschnitt 19 kann ein elektrisches Kontaktmittel 20 aufgebracht werden, beispielsweise eine Kupferschicht oder eine Silberschicht. Diese Schicht ist mit einem elektrischen Leiter 21 kontaktiert.

Auf der linken Seite überragt die zweite Halbzelle H2 die erste Halbzelle H1 und bildet den überragenden Abschnitt 19, sodass auch die zweite elektrisch leitende Schicht der zweiten Halbzelle H2 mit einem elektrischen Kontaktmittel 20 kontaktiert werden kann, aus dem schließlich ein elektrischer Leiter 21 herausgeführt wird. In nicht näher gezeigter Weise können dabei die elektrischen Kontaktmittel 20, die auf den Deckschichten 15 aufgebrachten elektrisch leitenden Schichten kontaktieren, die Teil der jeweiligen Halbzelle H1, H2 sind. In den überragenden Abschnitten 19 wurden die elektrochrome Schicht beziehungsweise die Ionen-Speicherschicht 14 entfernt, um die elektrisch leitende Schicht 11, z.B. die ITO-Schicht, unmittelbar zu kontaktieren. Das Überragen der jeweiligen Abschnitte der Deckschichten 15 kann auf einem ersten halben Umfang beispielsweise durch die erste Deckschicht 15 und auf einem zweiten halben Umfang beispielsweise durch die zweite Deckschicht 15 ausgebildet sein.

Zwischen den beiden Halbzellen H1, H2 befindet sich die Klebemasse 17, derart, dass diese die Elektrolytschicht 13 oder Elektrolyt- 13, elektrochrome 12 und Ionen-Speicherschicht 14 wenigstens teilweise und im Besonderen vollumfänglich umschließt und somit eine sehr effektive Abdichtung bildet. Die Klebemasse 17 erstreckt sich folglich mit Bezug auf die Höhenrichtung von Deckschicht zu Deckschicht der ersten und zweiten Halbzelle H1, H2.

Gemäß Figur 3 ist der Kunststoffkörper 18 lediglich über der zweiten, unteren Halbzelle H2 angespritzt und umschließt die überragenden Abschnitte 19 mit den elektrischen Kontaktmitteln 20 und schließt schließlich randseitig mit der ersten Halbzelle H1 ab. Dieses Beispiel zeigt, dass das Schichtsystem 10 lediglich einseitig mit einem Kunststoffkörper angespritzt werden kann, sodass das Schichtsystem 10 selbst mit der Deckschicht eine Außenhaut des Flächenkörpers 1 bildet.

Gemäß Figur 4 ist der Kunststoffkörper 18 hingegen so angespritzt, dass dieser das Schichtsystem 10 vollumfänglich umschließt, sodass die gesamte Außenhaut des Flächenkörpers 1 aus dem Kunststoffkörper 18 besteht, und lediglich noch die elektrischen Leiter 21 aus dem Kunststoffkörper 18 herausgeführt sind.

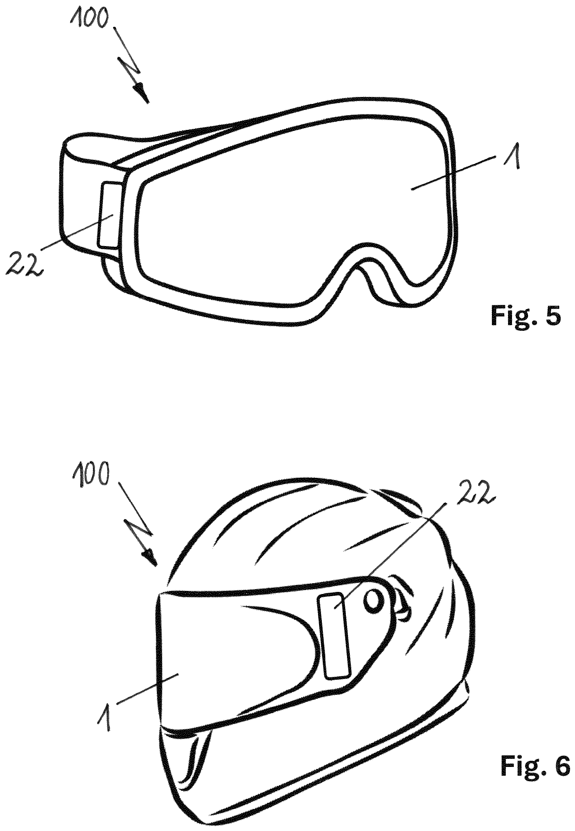

Figur 5 zeigt ein Ausführungsbeispiel eines Augenschutzes 100 in Form einer Skibrille, sodass die Verglasung der Skibrille durch den Flächenkörper 1 gebildet wird. Zur Spannungsversorgung kann eine Spannungs- oder Stromquelle 22 dienen, und in nicht näher gezeigter Weise kann eine Steuerung vorgesehen sein, um die Speisespannung für den Flächenkörper 1 einzustellen.

Figur 6 zeigt ein weiteres Ausführungsbeispiel eines Augenschutzes 100 in Form eines Visiers für einen Motorradhelm. Auch hier befindet sich eine Spannungs- oder Stromquelle 22 zur Speisung des Flächenkörpers 1 am Visier, sodass der Transmissionsgrad des Visiers über die angelegte Spannung am Schichtsystem variiert werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Flächenkörper

- 10: Schichtsystem
- 11: elektrisch leitende Schicht
- 12: elektrochrome Schicht
- 13: Elektrolytschicht
- 14: Ionen-Speicherschicht
- 15: Deckschicht
- 16: Randbereich
- 17: Klebemasse
- 18: Kunststoffkörper
- 19: überragender Abschnitt
- 20: elektrisches Kontaktmittel
- 21: elektrischen Leiter
- 22: Spannungs- oder Stromquelle

- 100: Augenschutz

- H1: erste Halbzelle
- H2: zweite Halbzelle

## Patentansprüche

1. Flächenkörper (1) mit einem elektrochromen Schichtsystem (10), wobei das Schichtsystem (10) zwei elektrisch leitende Schichten (11) aufweist, zwischen denen eine elektrochrome Schicht (12), eine Elektrolytschicht (13) und eine Ionen-Speicherschicht (14) angeordnet sind, und wobei das Schichtsystem (10) zwei außenseitige Deckschichten (15) aufweist,
**dadurch gekennzeichnet,**
**dass** das Schichtsystem (10) wenigstens abschnittsweise einen Randbereich (16) aufweist, der mit einer Klebemasse (17) als Permeationsbarriere verklebt ist, derart, dass wenigstens die Elektrolytschicht (13) von der Klebemasse (17) randseitig eingefasst ist, und wobei das Schichtsystem (10) zumindest im Randbereich (16) mit einem Kunststoffkörper (18) umschlossen ist, der auch die Klebemasse (17) wenigstens überwiegend mit umschließt.

2. Flächenkörper (1) nach Anspruch 1,
**dadurch gekennzeichnet,**
**dass** der Kunststoffkörper (18) im Spritzgussverfahren an das Schichtsystem (10) angespritzt ist.

3. Flächenkörper (1) nach Anspruch 1 oder 2,
**dadurch gekennzeichnet,**
**dass** der Kunststoffkörper (18) wenigstens teilweise den Randbereich (16) umschließt und mit den außenseitigen Deckschichten (15) dichtend abschließt.

4. Flächenkörper (1) nach einem der Ansprüche 1 bis 3,
**dadurch gekennzeichnet,**
**dass** der Kunststoffkörper (18) den Randbereich (16) und eine Deckschicht (15) oder beide Deckschichten (15) außenseitig vom Randbereich (16) unterbrechungsfrei übergehend umschließt.

5. Flächenkörper (1) nach einem der vorgenannten Ansprüche,
**dadurch gekennzeichnet,**
**dass** die Klebemasse (17) sich zwischen den elektrisch leitenden Schichten (11) und/oder der elektrochromen und Ionen-Speicherschicht erstreckt und/oder dass die Klebemasse (17) die Elektrolytschicht (13) vollumfänglich umschließt.

6. Flächenkörper (1) nach einem der vorgenannten Ansprüche,
**dadurch gekennzeichnet,**
**dass** die erste Deckschicht (15) mit einer ersten elektrisch leitenden Schicht (11) und/oder mit der elektrochromen Schicht (12) eine erste Halbzelle (H1) bildet und die zweite Deckschicht (15) mit einer zweiten elektrisch leitenden Schicht (11) und/oder mit der Ionen-Speicherschicht (14) eine zweite Halbzelle (H2) bildet, wobei die beiden Halbzellen (H1, H2) eine voneinander abweichende Kontur (K) aufweisen, sodass eine Halbzelle (H1) die andere Halbzelle (H2) lokal oder abschnittsweise in seiner Erstreckungsebene überragt.

7. Flächenkörper (1) nach Anspruch 6,
**dadurch gekennzeichnet,**
**dass** im überragenden Abschnitt (19) der jeweiligen Halbzelle (H1, H2) ein elektrisches Kontaktmittel (20) eingerichtet ist.

8. Flächenkörper (1) nach Anspruch 7,
**dadurch gekennzeichnet,**
**dass** das elektrische Kontaktmittel (20) vom Kunststoffkörper (18) mit umschlossen ist und von einem elektrischen Leiter (21) durchbrochen ist.

9. Flächenkörper (1) nach einem der vorgenannten Ansprüche,
**dadurch gekennzeichnet,**
**dass** die Klebemasse (17) zusätzlich einen Getter zur Feuchtigkeitsabsorption aufweist und/oder mittels eines Acrylatklebers gebildet ist.

10. Flächenkörper (1) nach einem der vorgenannten Ansprüche,
**dadurch gekennzeichnet,**
**dass** der Kunststoffkörper (18) einen Polycarbonat-, einen Polyethylenterephthalat- oder einen Polymethylmethacrylat-Kunststoff aufweist.

11. Flächenkörper (1) nach einem der vorgenannten Ansprüche,
**dadurch gekennzeichnet,**
**dass** der Flächenkörper (1) einen Augenschutz bildet.

12. Augenschutz (100), aufweisend einen Flächenkörper (1) nach einem der vorgenannten Ansprüche und eine Spannungs- oder Stromquelle (22).

13. Augenschutz (100) nach Anspruch 12,
**dadurch gekennzeichnet,**
**dass** der Augenschutz (100) als Brille, als Visier oder als Scheibe eines Wasser-, Land- oder Luftfahrzeugs ausgebildet ist.

14. Verfahren zur Herstellung eines Flächenkörpers (1) mit einem elektrochromen Schichtsystem (10), wobei das Schichtsystem (10) zwei elektrisch leitende Schichten (11) aufweist, zwischen denen eine elektrochrome Schicht (12), eine Elektrolytschicht (13) und eine Ionen-Speicherschicht (14) angeordnet sind, und wobei das Schichtsystem (10) zwei außenseitige Deckschichten (15) aufweist, und wobei das Verfahren wenigstens die folgenden Schritte umfasst:
- wenigstens abschnittsweises Verkleben eines Randbereiches (16) des Schichtsystems (10) mit einer Klebemasse (17),
- wobei das Verkleben derart erfolgt, dass wenigstens die Elektrolytschicht (13) von der Klebemasse (17) randseitig eingefasst wird, und
- Umschließen des Schichtsystems (10) zumindest im Randbereich (16) mit einem Kunststoffkörper (18), mit dem auch die Klebemasse (17) wenigstens überwiegend mit umschlossen wird.

15. Verfahren nach Anspruch 14,
**dadurch gekennzeichnet,**
**dass** der Kunststoffkörper (18) mittels eines Spritzgießens an oder um das Schichtsystem (10) gespritzt wird.
